# EUROPEAN PATENT SPECIFICATION

(11) **EP 1 270 512 B1**
(45) Date of publication and mention of the grant of the patent: **14.10.2009**
(21) Application number: 01115294.9
(22) Date of filing: 25.06.2001
(51) Int. Cl.: C01G 23/00

(54) **Process for thermal decomposition and pre-calcination of barium titanyl oxalate for the production of barium titanate**
Verfahren zur thermischen Zersetzung und Vorkalzinierung von Bariumtitanyloxalat zur Herstellung von Bariumtitanate
Procédé de décomposition thermique et de précalcination de titanyloxalate de barium

(43) Date of publication of application: 02.01.2003
(73) Proprietor: Evonik Degussa GmbH, 45128 Essen (DE)
(72) Inventor: Gutsch, Andreas, Dr., 63691 Ranstadt (DE); Katusic, stipan, 65779 Kelkheim (DE); Krämer, Michael, 63477 Maintal (DE); Kress, Peter, 63579 Freigericht (DE); Varga, Geoffrey J., 63579 Freigericht (DE); Zimmermann, Guido, 63454 Hanau (DE)

(56) References cited:
- EP-A- 0 141 696
- US-A- 2 860 998
- US-A- 2 985 506
- US-A- 5 009 876
- PATENT ABSTRACTS OF JAPAN vol. 1998, no. 04, 31 March 1998 (1998-03-31) & JP 09 313918 A (NIPPON SANSO KK), 9 December 1997 (1997-12-09)
- PATENT ABSTRACTS OF JAPAN vol. 2000, no. 19, 5 June 2001 (2001-06-05) & JP 2001 048521 A (DENKI KAGAKU KOGYO KK), 20 February 2001 (2001-02-20)
- PATENT ABSTRACTS OF JAPAN vol. 2000, no. 08, 6 October 2000 (2000-10-06) & JP 2000 143229 A (DEGUSSA HUELS AG), 23 May 2000 (2000-05-23)

## Description

The invention relates to a process for making oxalate-derived barium titanate and, more specifically, to a new and improved process for drying and thermally decomposing barium titanyl oxalate tetrahydrate prior to the final calcination to yield barium titanate.

Oxalate-derived barium titanate powders, due to their high dielectric constant, are used extensively in the manufacturing of passive electronic components such as multilayer ceramic capacitors (MLC's). These powders are typically synthesised in aqueous systems by reacting barium and titanium containing compounds, such as chlorides or carbonates, with oxalic acid in a batch-type or continuous reactor. After the precipitation of the barium titanyl oxalate tetrahydrate (BTO), the crystals are then separated from the liquid phase by filtration or other solid-liquid separation techniques. Following this, the BTO, which often still contains some physically bound water, must be fully dried and calcined in an oxidizing atmosphere at temperatures in the range of 1000°C in order to thermally decompose the precursor material to barium titanate and to develop the proper crystalline size and structure which are necessary to achieve a high dielectric constant. In order to obtain the desired electrical properties of the final barium titanate product, the temperature profile of the kilns must be precisely controlled so as to give the product a very specific time-temperature history.

The thermal decomposition and calcination of the BTO is typically performed in bulk in a batch-type or continuous tunnel kiln, or in a rotary calciner. Bulk calcination of the BTO has the drawback of requiring very slow heating rates in order to avoid fluidization of the powder resulting from rapid off-gassing of water vapor, CO, and CO₂ upon drying and decomposition. This fluidization can cause the powder to come out of the containers in a batch or continuous tunnel kiln, or in the case of a rotary calciner, the material may experience widely varied time-temperature histories as a result of fluidization which affect product quality and uniformity. Because of this, heating rates must be reduced to the point where the throughput of the calcination kiln is significantly lower than what would be possible without the problem of fluidization due to rapid off-gasing of powders in the bulk form.

Another drawback of the current method of pyrolyzing BTO in the bulk phase is temperature control during the rapid evolution of CO gas upon the thermal decomposition of the BTO.

Without tightly controlled, slow heating rates and high airflows through the kilns, this evolution of CO in an oxidizing atmosphere can result in rapid burning of the CO, leading to the possibility of uncontrolled heat release which adversely affects the temperature control of the process and variability of the product properties.

In the case of calcining the BTO precursor in a container which is placed in a batch or tunnel kiln, the volume of material in each container or sagger is greatly reduced as a result of the drying and decomposition of the wet BTO precursor. Typically, a sagger whose volume is fully loaded with precursor exits the kiln with only about 40% of it's volume occupied by barium titanate product. This also has the effect of reducing the throughput and efficiency of a given kiln due to the limited amount of product in each container as it exits the kiln.

In U.S. 2,860,998 a metal titanate composition and a device use for its production is disclosed.

In JP9313918 a device for producing inorganic spherical granules in the flames of the oxygen-gas combustion burner is disclosed with optimized conditions of a burner by setting the position, at which the gas flow speed in the flame center is lowered to a specified speed, to be a specified range from the tip of the burner.

In JP 2001048521 a mehtod for the production of fine silica powder is disclosed by supplying a flammable gas and a supporting gas into a spherical burner in a vertical furnace to generate a high temperature flame

The miniaturization of electronic components and the desire to increase the volumetric efficiency of multilayer capacitors has led to the development of dielectric layers of constantly decreasing thickness. In order to construct these thin layers, MLC manufacturers must be supplied with dielectric powders of smaller particle size. Due to this requirement, the oxalate-derived barium titanate powders commonly require milling to achieve the desired particle size distributions (U.S. 6,129,903), typically in the submicron range for current applications. Calcined barium titanate, due in part to it's solid non-porous structure, requires extensive milling times in order to fulfil these size requirements. These long milling times produce wider particle size distributions, particularly with respect to the generation of ultra-fine particles in the lower end of the size distribution. The presence of these ultra-fine particles, whose relative frequency is due in part to long milling times, is known to adversely affect the temperature coefficient of capacitance response of the dielectric, particularly in the case of thin-layer MLC applications. It is known that the morphology of the calcined barium titanate particles is an important factor with respect to their millibility (U.S. 5,009,876).

The present invention provides a new and improved method for the production of oxalate-derived barium titanate by the use of flash calcination prior to the final calcination of the material.

The process according to the invention comprises the steps of
a. dispersing as a precursor barium titanyl oxalate tetrahydrate or a liquid slurry thereof in a gas
b. feeding the mixture to a tubular, vertically oriented flame reactor 2, comprising a heat source 3, which is mounted at the top of the flame reactor 2 and which is coupled to a feeding device 5 that supplies the heat source 3 with gaseous or liquid fuel,
   the fuel generating a vertically oriented flame 4, the length of the flame 4 being contained within the flame reactor 2, the flow conditions within the flame reactor are turbulent, the Reynolds' number being greater than 2000
c. introducing the precursor into the flame 4 so that the precursor is burned in an oxidizing atmosphere by maintaining the temperature in the flame reactor 2 at 100°C to 1400°C and at a residence time of between 0,05 and 10 seconds
d. cooling the solids-gas mixture coming out from the flame reactor 2 in a quenching unit 6 which is connected to the exit of the flame reactor 2 by means of cooling water, cooling gas or a combination thereof
e. separating the solid particles from the gas phase by means of a cyclone or filter.

In a special embodient the process according to the invention comprises a step in which the pre-calcined barium titanate is thermally decomposed in a calcination kiln 8.

The process includes as a first step dispersing the barium titanyl oxalate tetrahydrate or a liquid slurry thereof in a gas. In a second step the temperature of the solids-gas or solids-liquid-gas mixture is increased to a temperature of 100°C - 1400°C according to the extent of decomposition which is desired, and separating the partially or fully decomposed BTO from the gas.

Particularly the following advantages can be obtained with the method according to the invention:

Unlike oxalate-derived barium titanate manufactured according to the known method, powders produced according to the inventive method may undergo final calcination in bulk form using high heating rates in a batch, tunnel or rotary calcining furnace without the problem of fluidization of the powders due to rapid off-gassing. This allows for higher product throughput of the kilns due to the reduced time allotment for the ramp up phase of the temperature profile. In addition, the dwell time at the maximum kiln temperature which is required to develop the high dielectric constant of the barium titanate is reduced due to increased heat transfer to the pre-calcined particles as the endothermic decomposition reactions are partially or entirely completed. As a result of the reduced time requirements for temperature ramp rates and dwell times at the peak temperature, the overall residence time requirement in the furnaces is reduced by the order of 30%.

Because the decomposition reactions in which CO gas is evolved take place in the flash calciner (flame reactor) during the pre-calcination step when using the inventive method, the burning of CO does not take place in the final calcination step. This eliminates the problem of uncontrolled heat release in the calcination kilns, and the need for excessive air flows inside the kiln which are used to carry off the gasses of decomposition. The result is improved temperature uniformity in the kiln, along with reduced energy requirement for heating excessive amounts of purge air inside the furnace.

When the flash calcined material is loaded into saggers for final calcination in a batch-type or continuous tunnel kiln, the weight loss and volume reduction of the powder is significantly less than that of powder which is processed according to the known method. This results in a greater amount of barium titanate product powder in each sagger upon exiting the kiln. Typically, this amounts to 50% or more product in each sagger, which when combined with the reduced residence time requirement of each sagger, results in a throughput increase on the order of 100% for a given kiln.

As the BTO precursor powder is dispersed in the gas phase then rapidly heated and decomposed in the flash calciner, the evolution of water vapor, CO and CO₂ occurs suddenly. This sudden, rapid evolution of gas from the precursor crystals imparts a porous structure into the particles. After final calcination of the barium titanate particles, this porous structure remains and provides the powders produced by the inventive method with improved millibility, made evident by the shorter milling times required to achieve the target average particle size. The shorter milling times result in a more narrow particle size distribution, particularly with respect to a relative decrease in the quantity of ultra-fine particles, which leads to an improved temperature coefficient of capacitance (TCC) across a broad temperature range. This effect is particularly evident in thin-layer MLC applications, where the TCC curve tends to rotate out of specification when using powders manufactured by the known method.

The invention will now be described with reference to the accompanying drawings and photographs, in which
- Figure 1: is a schematic diagram of a device for the synthesis of barium titanate,
- Figure 2: is a photograph showing the microscopic surface structure of a pre-calcined barium titanate particle,
- Figure 3: is a milling diagram for pre-calcined barium titanate and conventional barium titanate,
- Figure 4: is a diagram showing the temperature coefficients of capacitance for pre-calcined barium titanate and conventional barium titanate.

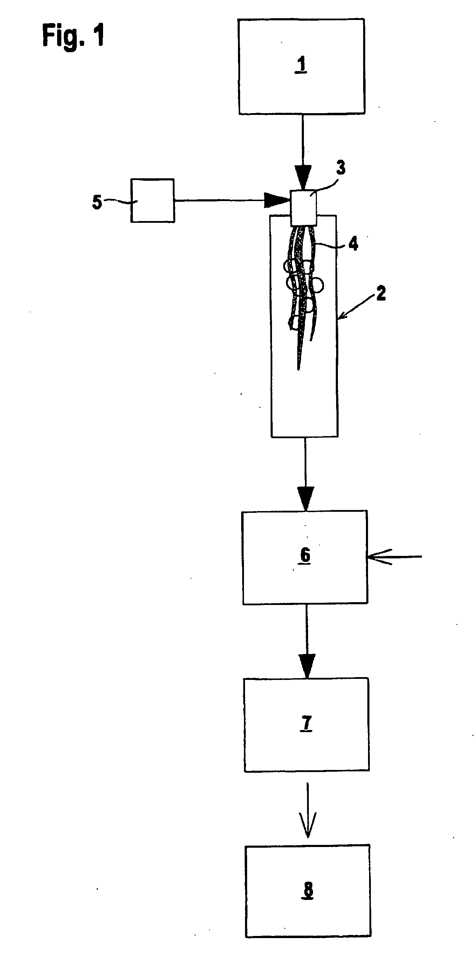

Figure 1 shows a diagram of a device for the synthesis of barium titanate. The device comprises a supply unit 1. In this supply unit 1 barium titanyl oxalate (BTO) is dispersed in a gas to produce a solids-gas mixture. Alternatively, the BTO is suspended in a liquid to produce a solids-liquids-gas mixture.

The BTO used in this process is synthesized by conventional techniques. Barium and titanium containing components such as chlorides, carbonates or acetates are reacted with oxalic acid in a batch type or continuous liquid phase reactor. After the precipitation of the BTO the crystals are separated from the liquid phase. The BTO is an organic precursor which is used for the synthesis of barium titanate. The precursor contains up to 70% of water by weight. The supply unit 1 comprises a proportioning device for controlling the amount of BTO fed in to the flame reactor 2.

The mixture produced in the supply unit 1 is fed to a flame reactor 2. The flame reactor 2 according to Figure 1 is a tubular flame reactor 2 which is vertically oriented.

A heat source 3 is mounted at the top of the flame reactor 2. Further, the mixture containing BTO is induced at the top of the flame reactor 2. The heat source 3 is generating a flame 4. The flame 4 is vertically oriented, where the length of the flame 4 is contained within the flame reactor 2.

The heat source 3 is coupled to a feeding device 5. The feeding device 5 supplies the heat source 3 with gaseous or liquid fuel. By use of this fuel the heat source 3 generates a so called chemical flame 4. Preferably, the flame 4 is a pre-mixed flame or a diffusion flame comprised of gaseous fuel which is burned in an oxidizing atmosphere. The precursor is introduced into the flame 4 so that the precursor is burned in an oxidizing atmosphere. The temperature in the flame reactor 2 is maintained at 100°C to 1400°C. Preferably, the temperature is maintained at 800°C to 1200°C

In the flame reactor 2, there is a vertically oriented downward flow of the precursor. The flow conditions within the flame reactor are turbulent, where the Reynolds' number of this flow is greater than 2000. Preferably, the Reynolds' number is greater than 10000.

The residence time of the particles in the flame 4 is between 0,05 and 10 seconds. During this period the precursor is partially thermally decomposed. In this process pre-calcined barium titanate is produced containing barium titanate and less than 25 weight % of organic materials. Preferably, the pre-calcined barium titanate contains less than 15 weight % of organic materials.

During the flame 4 pyrolysis (flash calcination) of BTO in the flame reactor 2 all physically and chemically bound water is removed from BTO. Therefore, the pre-calcined barium titanate does not contain water.

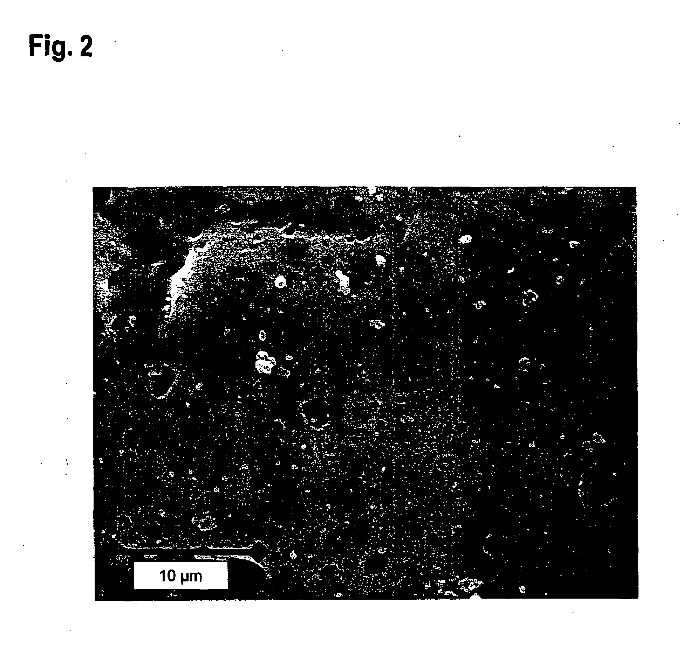

The heating of the BTO in the flame reactor 2 leads to a direct and rapid heating of the particles in the flame 4. Typically, the heating rates of the particles are varying in a range of 100 to 10.000 Kelvin per second. Due to this high heating rates there is a rapid evolution of CO and CO₂ in addition to the evolution of water. This sudden, rapid evolution of gas from the precursor impacts a porous structure of the pre-calcined barium titanate. The porous structure of one particle is shown in Figure 2.

Due to the downward flow of the particles inside the flame reactor 2 the pre-calcined barium titanate coming out from the flame 4 is flowing to the bottom of the flame reactor 2. In this section, the pre-calcined barium titanate is slightly cooled down.

A quenching unit 6 is connected to the exit of the flame reactor 2. The quenching unit 6 serves for cooling the pre-calcined barium titanate. The quenching unit 6 supplies cooling water, cooling gas or a combination thereof for cooling the solids-gas mixture coming out from the flame reactor 2.

The quenching unit 6 is followed by a filtering unit 7. The filtering unit 7 consists of a cyclone or filter for collection. In the filtering unit 7 the solid particles are removed from the gas phase.

The pre-calcined barium titanate synthesized by flash calcination can be used to produce multilayer ceramic capacitors MLC of high quality. The rapid heating in the flame reactor 2 leads to a porous structure of the pre-calcined barium titanate. Further, due to the rapid heating during flash calcination water, CO and CO₂ is removed from the pre-calcined barium titanate.

Due to this pre-calcined barium titanate can be easily thermally decomposed to barium titanate in a calcination kiln 8. The barium titanate is then used for the production of MLC's.

The calcination kiln 8 schematically shown in Figure 1 is a batch type or continuous tunnel kiln.

In contrast to conventional techniques of synthesizing barium titanate, pre-calcined barium titanate is fed to the calcination kiln instead of BTO. Due to this fact, the dwell time at the maximum kiln temperature necessary to develop the required dielectric constant of the barium titanate is significantly reduced. As a result of the reduced dwell times at the peak temperature the overall residence time in the kiln is reduced by the order of 30%.

Since all water and most of the CO and CO₂ has been removed from the BTO precursor, there is no off-gasing of water vapor and very limited off-gasing of CO and CO₂ in the kiln during the thermal decomposition of the pre-calcined barium titanate. Therefore, there is no fluidization problem with the pre-calcined barium titanate, when it is fed into two hot zone of the kiln in form of a powder.

Also, as a result of the removal of water, CO and CO₂ from the BTO precursor during flame calcination, there exists a more uniform heating of the bulk precalcined product during final calcination due to the decrease or elimination of highly endothermic or exothermic reactions which are nonuniform with respect to location or position within the bulk powder. This results in a more precise time-temperature profile for each particle present, which contributes to improved product quality and consistency.

In particular, the barium titanate synthesized by thermally decomposing pre-calcined barium titanate has an improved uniformity.

Due to the reduced residence time in the kiln the throughput in the production of barium titanate is increased significantly.

The throughput of the thermal process in the kiln is further increased by the fact, that the weight loss and volume reduction using pre-calcined barium titanate instead of BTO is decreased of about 50%.

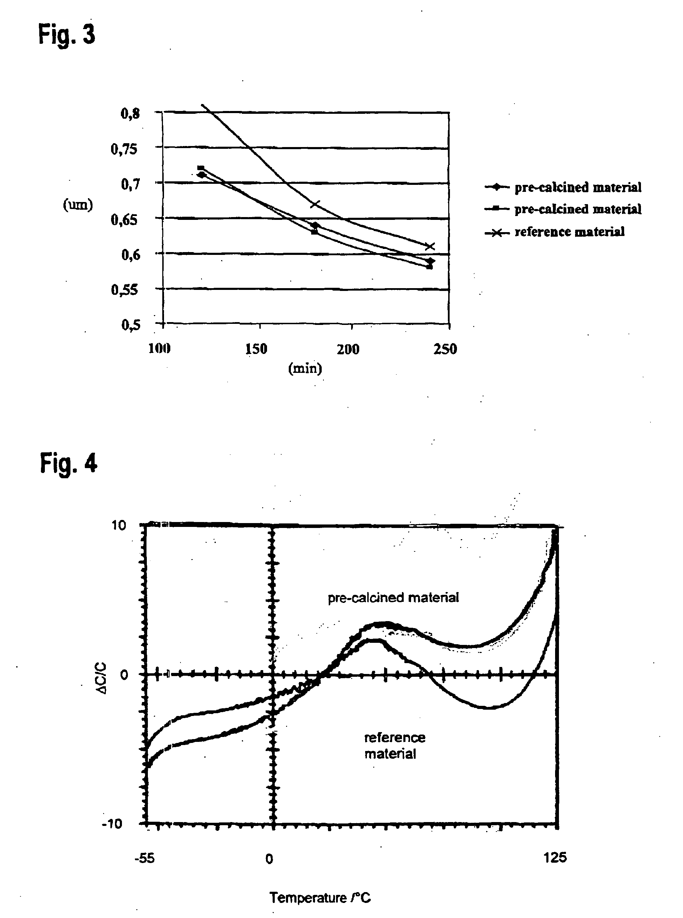

After final calcination of barium titanate the porous structure of the barium titanate particles remains. Therefore, barium titanate synthesized by the inventive method has an improved millibility with respect to conventional barium titanate. Figure 3 shows different milling curves for barium titanate powders. The milling curve is given by the particle size (µm) in dependence of the milling time. As shown in Figure 3 barium titanate synthesized by pre-calcined barium titanate leads to smaller particle sizes or smaller milling times compared to barium titanate synthesized by conventional techniques (reference material).

The shorter milling times result in a more narrow particle size distribution, particularly with respect to the generation of fewer ultrafine particles.

Due to this effect, barium titanate synthesized by the inventive method leads to an improved temperature coefficient of capacitance (TCC) across a broad temperature range.

Typical TCC curves are shown in Figure 4. The first curve ("reference material") shows the temperature dependency of the coefficient of capacitance (ΔC/C) for barium titanate synthesized by conventional techniques. This curve has a minimum at a temperature of about 90°C.

Further, the diagram according to Figure 4 shows the TCC curve for barium titanate synthesized by the inventive method ("pre-calcined material"). The minimum value of this curve at the temperature of about 90°C is shifted to higher values.

For X7R MLC applications the barium titanate must have a coefficient of capacitance meeting the requirement -10 ≤ ΔC/C ≤ +10 across the whole temperature range shown in Figure 4.

Another requirement for the use in MLC applications is to produce thin films of barium titanate. With decreasing thickness of these films the minimum of the TCC curve at 90°C is shifted to lower values. Therefore, when using barium titanate for the production of thin films in MLC applications the above mentioned requirement for the capacitance coefficient is met when using pre-calcined materials. However, when using the reference material according to Figure 4 the TCC curve may be out of the specified range.

Finally, when using barium titanate for certain MLC applications the barium titanate has to meet the so called X7R specification. This specification requires the barium titanate particles to be coated with a dopant formulation.

These dopant additives are most effective in a "core-shell" solid structure after final sintering of the MLC, with the core being comprised of the pure micron-scale barium titanate (ferroelectric) and the shell being comprised of only the dopant formulation (paraelectric) without excessive barium titanate contamination due to diffusion of the core material into the shell. Due to the known increase in sintering rates of barium titanate particles in the nanoscale range, the presence of a significant amount of these ultra-fine particles in the particle size distribution of the barium titanate results in excessive solid-state diffusion of barium titanate into the dopant shell structures at firing temperatures below the sintering point of micron-scale barium titanate core particles. This increased diffusion of ultra-fine barium titanate into the shell adversely affects the paraelectric characteristics of the solid phase dopant shell. This phenomena is known to result in an over-rotated TCC curve, particularly in thin layer applications. Due to this over-rotation of the TCC curve, the capacitance coefficient may be out of specification, particularly in the range of 80-100°C. The improved millibility of the flame calcined barium titanate is a result of it's porous structure due to high heating rates and rapid off-gassing of the organic precursor. This use of shorter milling times in the case of flame calcined barium titanate directly results in a decrease in the proportion of highly reactive ultra-fine particles present, which upon sintering of the MLC provide the undesirable diffusion of barium titanate into the dopant shell formulation described above.

### List of reference signs

- 1.: supply unit
- 2.: flame reactor
- 3.: heat source
- 4.: flame
- 5.: feeding device
- 6.: quenching unit
- 7.: filtering unit
- 8.: calcination kiln

## Claims

1. Process for the synthesis of pre-calcined barium titanate comprising the steps of
a) dispersing as a precursor barium titanyl oxalate tetrahydrate or a liquid slurry thereof in a gas
b) feeding the mixture to a tubular, vertically oriented flame reactor 2,
comprising a heat source 3, which is mounted at the top of the flame reactor 2 and which is coupled to a feeding device 5 that supplies the heat source 3 with gaseous or liquid fuel,
the fuel generating a vertically oriented flame 4, the length of the flame 4 being contained within the flame reactor 2, the flow conditions within the flame reactor are turbulent, the Reynolds' number being greater than 2000
c) introducing the precursor into the flame 4 so that the precursor is burned in an oxidizing atmosphere by maintaining the temperature in the flame reactor 2 at 100°C to 1400°C and at a residence time of between 0,05 and 10 seconds
d) cooling the solids-gas mixture coming out from the flame reactor 2 in a quenching unit 6 which is connected to the exit of the flame reactor 2 by means of cooling water, cooling gas or a combination thereof
e) separating the solid particles from the gas phase by means of a cyclone or filter.

2. Process for the synthesis of barium titanate, **characterized in that** the pre-calcined barium titanate according to claim 1 is thermally decomposed in a calcination kiln 8.

## Patentansprüche

1. Verfahren zur Synthese von vorcalciniertem Bariumtitanat, bei dem man
a) als Vorstufe Bariumtitanyloxalattetrahydrat oder eine flüssige Aufschlämmung davon in einem Gas dispergiert,
b) die Mischung einem röhrenförmigen, vertikal orientierten Flammenreaktor 2
mit einer Wärmequelle 3, die am Kopf des Flammenreaktors 2 angebracht ist und an eine Zufuhrvorrichtung 5, die die Wärmequelle 3 mit gasförmigem oder flüssigem Brennstoff versorgt, gekoppelt ist,
zuführt, wobei der Brennstoff eine vertikal orientierte Flamme 4 erzeugt, wobei die Länge der Flamme 4 in dem Flammenreaktor 2 eingeschlossen ist, und die Strömungsbedingungen im Flammenreaktor turbulent sind, wobei die Reynolds-Zahl größer als 2000 ist,
c) die Vorstufe so in die Flamme 4 einträgt, daß die Vorstufe in einer oxidierenden Atmosphäre verbrannt wird, indem man die Temperatur im Flammenreaktor 2 bei 100°C bis 1400°C und die Verweilzeit zwischen 0,05 und 10 Sekunden hält,
d) das aus dem Flammenreaktor 2 austretende Feststoff-Gas-Gemisch in einer Quencheinheit 6, die mit dem Ausgang des Flammenreaktors 2 verbunden ist, mit Hilfe von Kühlwasser, Kühlgas oder einer Kombination davon abkühlt,
e) die festen Teilchen mit Hilfe eines Zyklons oder Filters von der Gasphase abtrennt.

2. Verfahren zur Synthese von Bariumtitanat, **dadurch gekennzeichnet, daß** das vorcalcinierte Bariumtitanat nach Anspruch 1 in einem Calcinierungsofen 8 thermisch zersetzt wird.

## Revendications

1. Procédé de synthèse de titanate de baryum précalciné comprenant les étapes consistant à :
a) disperser, en tant que précurseur, de l'oxalate de baryum-titanyle tétrahydraté ou une suspension liquide de celui-ci dans un gaz,
b) charger le mélange dans un réacteur tubulaire à flamme orientée verticalement 2,
comprenant une source de chaleur 3, montée au sommet du réacteur à flamme 2 et couplée à un dispositif d'alimentation 5 qui alimente la source de chaleur 3 en combustible gazeux ou liquide,
le combustible produisant une flamme 4 orientée verticalement, la longueur de la flamme 4 étant contenue à l'intérieur du réacteur à flamme 2, les conditions d'écoulement à l'intérieur du réacteur à flamme étant turbulentes, le nombre de Reynolds étant supérieur à 2000,
c) introduire le précurseur dans la flamme 4 de manière à ce que le précurseur soit brûlé dans une atmosphère oxydante en maintenant la température dans le réacteur à flamme 2 à une valeur de 100°C à 1400°C est avec un temps de séjour compris entre 0,05 et 10 secondes,
d) refroidir le mélange solides-gaz sortant du réacteur à flamme 2 dans une unité de trempe 6 qui est reliée à la sortie du réacteur à flamme 2 au moyen d'eau de refroidissement, d'un gaz de refroidissement ou d'une combinaison des deux,
e) séparer les particules solides de la phase gazeuse au moyen d'un cyclone ou d'un filtre.

2. Procédé de synthèse de titanate de baryum, **caractérisé en ce que** le titanate de baryum précalciné selon la revendication 1 est soumis à une décomposition thermique dans un four de calcination 8.
